# DEMANDE DE BREVET EUROPEEN

(11) **EP 1 669 130 A1**
(43) Date de publication de la demande: **14.06.2006**
(21) Numéro de dépôt: 05300850.4
(22) Date de dépôt: 24.10.2005
(51) Int. Cl.: B01F 3/02, G01N 33/00

(54) **Dispositif d'étalonnage adapté à un analyseur de gaz et procédé associé**

(30) Priorité: 09.11.2004 FR 0411938
(71) Demandeur: Renault s.a.s., 92100 Boulogne Billancourt (FR)
(72) Inventeur: Brulefer, Joel, 77170, Brie Comte Robert (FR)

(57) **Abrégé**

Le dispositif d'étalonnage adapté à un analyseur de gaz comprend un circuit de gaz zéro 4 de dilution relié à une source de gaz zéro 32 de dilution, un circuit de gaz d'étalonnage 3 relié à une source de gaz d'étalonnage 7, une conduite de mélange 6 raccordée audits circuits de gaz et apte à être reliée à l'analyseur 2 de gaz, et un moyen de sélection 5 du rapport de dilution du gaz d'étalonnage, traversé par les circuits de gaz, et pourvu d'une pluralité d'éléments calibrés pour le passage des gaz, chacun des circuits de gaz traversant un nombre prédéfini d'éléments calibrés relatif au rapport de dilution sélectionné, la section de passage globale des éléments calibrés traversés par lesdits gaz étant constante.

## Description

La présente invention concerne un dispositif d'étalonnage adapté à un analyseur de gaz, ainsi qu'un procédé associé.

Les analyseurs de gaz permettent de mesurer des gaz, notamment par l'intermédiaire de sondes de prélèvement, afin de quantifier des concentrations de polluants observés dans une atmosphère surveillée. Le contrôle des concentrations de polluants dans des effluents gazeux, sur des installations industrielles, peut être effectué de manière ponctuelle ou continue, et nécessite un très grand nombre d'extractions ce qui implique la possession d'un parc d'analyseurs relativement important. Pour obtenir des résultats d'analyse fiables, il est nécessaire de prévoir un étalonnage ou un calibrage périodique des analyseurs de gaz avec des gaz étalons constitués par les polluants gazeux qui sont contrôlés.

A cet effet, on connaît des appareils d'étalonnage dits « à buses soniques » conçus pour la préparation de mélanges gazeux permettant de diluer un gaz primaire à concentration connue avec un gaz zéro de dilution dans un rapport déterminé et constant afin d'obtenir un mélange étalon pour le contrôle d'un analyseur de gaz. On entend ici par « gaz zéro de dilution », un gaz pur de tout gaz polluant. Lesdits appareils comprennent des orifices calibrés, de l'ordre du centième de millimètres, à travers lequel on applique une différence de pression supérieure au double de la pression avale pour obtenir un débit fixe et indépendant de ladite pression avale.

De tels appareils présentent l'inconvénient de ne pas permettre une variation du rapport de dilution du gaz primaire sans qu'il soit nécessaire d'étalonner le débit des buses. Par ailleurs, ces appareils sont relativement coûteux ce qui peut être incompatible avec une implantation dans un parc d'analyseurs de taille relativement importante.

On connaît également, par le document FR-A-2 531 220, un appareil d'étalonnage adapté à un analyseur de gaz comprenant une enceinte reliée à une source de gaz d'étalonnage et régulée thermiquement. A l'intérieur de l'enceinte est monté un tube perméable aux gaz dont une extrémité est reliée à une source de gaz zéro de dilution, l'autre extrémité étant reliée à une chambre de mélange communiquant également avec la source de gaz zéro de dilution. A l'intérieur de l'enceinte, on maintient constante la pression partielle du gaz d'étalonnage afin d'obtenir une vitesse de diffusion par unité de temps constante, ce qui permet l'obtention d'une concentration constante de gaz d'étalonnage dans le gaz zéro à la sortie du tube.

Outre le fait d'être de conception relativement complexe et coûteuse, le dispositif présente l'inconvénient de nécessiter un maintien en température de l'enceinte ainsi qu'une régulation de la pression partielle du gaz d'étalonnage pour conserver un rapport de dilution constant.

La présente invention a donc pour but de remédier à ces inconvénients en proposant un dispositif d'étalonnage adapté à un analyseur de gaz, de conception particulièrement simple, et permettant d'obtenir un rapport de dilution d'un gaz d'étalonnage relativement précis et indépendant de la valeur de la pression des gaz au niveau du dispositif.

La présente invention a également pour objet un dispositif d'étalonnage permettant de modifier aisément le rapport de dilution du gaz d'étalonnage tout en conservant un niveau de perte de charge constant.

A cet effet, le dispositif d'étalonnage adapté à un analyseur de gaz, selon un aspect de l'invention, comprend un circuit de gaz zéro de dilution relié à une source de gaz zéro de dilution, un circuit de gaz d'étalonnage relié à une source de gaz d'étalonnage, une conduite de mélange raccordée audits circuits de gaz et apte à être reliée à l'analyseur de gaz, et un moyen de sélection du rapport de dilution du gaz d'étalonnage, traversé par les circuits de gaz, et pourvu d'une pluralité d'éléments calibrés pour le passage des gaz, chacun des circuits de gaz traversant un nombre prédéfini d'éléments calibrés relatif au rapport de dilution sélectionné, la section de passage globale traversés par les gaz étant constante.

On entend ici par « section de passage globale », la somme des sections élémentaires des éléments calibrés traversés pas le gaz zéro de dilution et le gaz d'échantillonnage.

Avec un tel moyen de sélection présentant, quel que soit le rapport de dilution retenu, une section de passage totale des gaz zéro de dilution et d'étalonnage constante, le dispositif offre ainsi l'avantage de conserver une même perte de charge. Il devient ainsi possible de réaliser un étalonnage précis et fiable de l'analyseur de gaz avec les différents rapports de dilution du dispositif, sans qu'il soit nécessaire d'étalonner à nouveau le débit des éléments calibrés lors du passage d'un rapport de dilution à un autre.

Par ailleurs, de par sa conception, le dispositif permet d'obtenir un rapport de dilution constant quelque soit la variation de pression à l'intérieur des circuits de gaz, ce qui permet de s'affranchir de l'utilisation de moyens de régulation de pression généralement onéreux.

Dans un mode de réalisation préféré, le nombre total d'éléments calibrés répartis entre les circuits de gaz d'étalonnage et de gaz zéro de dilution est constant, les sections de passage élémentaires des éléments calibrés étant identiques entre elles.

Une répartition constante d'éléments calibrés de même section entre le circuit de gaz zéro de dilution et le circuit de gaz d'étalonnage, quel que soit le rapport de dilution sélectionné, permet d'obtenir un dispositif conservant la même perte de charge de manière particulièrement simple, économique, et efficace.

De préférence, le moyen de sélection comprend un disque pourvu d'une pluralité de secteurs angulaires, les éléments calibrés traversés par les circuits de gaz étant disposés au niveau d'une paire de secteurs angulaires opposés.

Avantageusement, la source de gaz zéro de dilution est constituée par la source de gaz d'étalonnage, le circuit de gaz zéro de dilution comprenant un élément de filtrage du gaz d'étalonnage.

Cette disposition permet, dans le cas où l'élément de filtrage est apte à absorber les gaz polluants effluents, de simplifier le dispositif en supprimant la source de gaz zéro de dilution et l'élément de raccordement dédié à ladite source.

De préférence, le dispositif comprend un raccord apte à permettre l'obtention d'un débit de fuite supérieur au débit du circuit de gaz zéro de dilution lorsque le rapport de dilution sélectionné est minimum. Le raccord peut être monté au niveau de la conduite de mélange ou au niveau du circuit de gaz zéro de dilution, en amont du moyen de sélection du rapport de dilution du gaz d'étalonnage.

Dans un mode de réalisation, le dispositif comprend une pompe pour la circulation des gaz constituée par la pompe du circuit d'échantillonnage de l'analyseur de gaz.

Le dispositif présente ainsi l'avantage d'utiliser la pompe de l'analyseur de gaz pour assurer la circulation des gaz, ce qui permet d'utiliser une unique pompe pour l'ensemble constitué par l'analyseur de gaz et le dispositif d'étalonnage. Le dispositif ne nécessite ainsi pas de pompe spécifique engendrant un surcoût énergétique.

Dans un autre mode de réalisation, les sources de gaz sont aptes à permettre la circulation desdits gaz.

L'invention concerne également un procédé d'étalonnage d'un analyseur de gaz comprenant les étapes au cours desquelles :
- on fait circuler des gaz zéro de dilution et d'étalonnage dans des circuits distincts,
- on fait varier la section de passage des gaz de chacun des circuits en fonction du rapport de dilution désiré,
- on conserve constante la section de passage globale des gaz desdits circuits, et
- on mélange les gaz zéro de dilution et d'étalonnage.

L'invention et ses avantages seront mieux compris à l'étude de la description de modes de réalisation nullement limitatifs, et illustrés par les dessins annexés, sur lesquels :
- la figure 1 est une vue schématique de face d'un dispositif selon un premier mode de réalisation de l'invention ;
- la figure 2 est une vue en section d'un élément du dispositif de la figure 1 selon l'axe II-II de la figure 1 ;
- la figure 3 est une vue schématique de face d'un dispositif selon un second mode de réalisation de l'invention ; et
- la figure 4 est une vue schématique de face d'un dispositif selon un troisième mode de réalisation de l'invention.

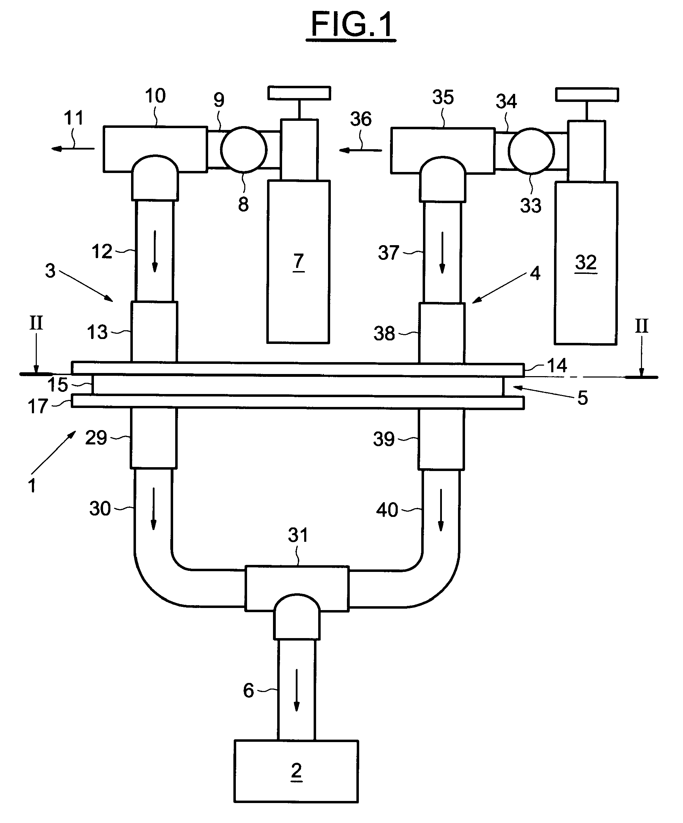

Sur la figure 1, on a représenté, la structure générale d'un dispositif d'étalonnage 1, selon un premier mode de réalisation, associé à un analyseur 2 de gaz. Le dispositif d'étalonnage est orienté ici sensiblement verticalement.

Le dispositif 1 comprend un circuit de gaz d'étalonnage 3, un circuit de gaz zéro 4 de dilution, un moyen de sélection du rapport de dilution 5 du gaz d'étalonnage traversé par lesdits circuits, et une conduite de mélange 6 des gaz, montée en aval du moyen de sélection du rapport de dilution 5, et reliée à l'analyseur 2.

Le circuit de gaz d'étalonnage 3 comprend une source de gaz d'étalonnage 7 pourvue d'un élément de régulation de pression 8, par exemple un manomètre. A la sortie de la source d'étalonnage 7, le gaz est véhiculé par une conduite 9 jusqu'à un raccord 10 en té permettant l'obtention d'un débit de fuite contrôlé par le régulateur de pression 8 et illustré schématiquement par la flèche 11. Une conduite 12 est reliée à une branche du raccord 10 et amène le gaz d'étalonnage à un tube 13 de raccordement supérieur, fixé sur une plaque 14 de support supérieure. La plaque 14 est montée en appui contre le moyen de sélection 5 du rapport de dilution.

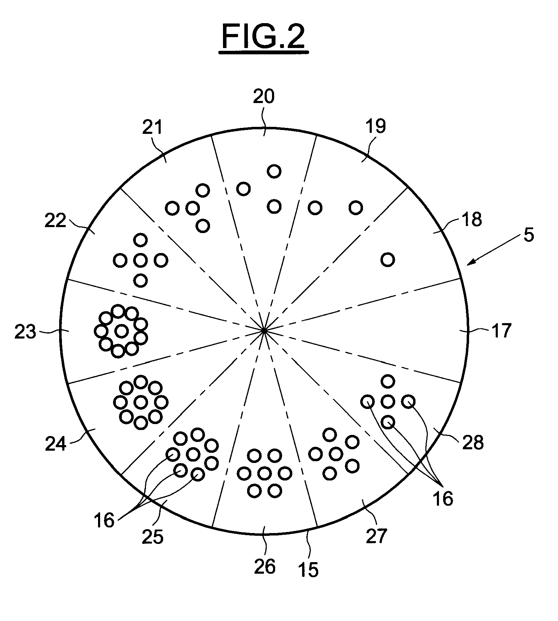

Comme illustré plus visiblement à la figure 2, le moyen de sélection 5 comprend un disque 15 et des éléments calibrés 16, réalisés sous la forme d'orifices traversant de part en part ledit disque 15. Le disque 15 est ici subdivisé schématiquement en douze secteurs angulaires égaux, référencés 17 à 28. Les éléments calibrés 16 présentent une même section de passage élémentaire. La taille des éléments calibrés 16 peut par exemple être de 0,3 mm. Les éléments calibrés 16 sont agencés de manière qu'un nombre constant d'éléments calibrés 16 soit réparti entre chaque paire de secteurs angulaires diamétralement opposés. Chaque paire de secteur angulaire comprend ici dix éléments calibrés. Par exemple, le secteur angulaire 20 comprend ici trois éléments calibrés 16, le secteur angulaire 26 opposé comprenant sept éléments calibrés 16. Bien entendu, il est également envisageable de prévoir un nombre différent d'éléments calibrés 16 par paire de secteur angulaire, une orientation angulaire différente desdites paires, ainsi que des éléments calibrés présentant des sections de passage élémentaires différentes en conservant, toutefois, une section de passage globale constante entre les paires de secteurs angulaires destinées à être utilisées conjointement pour le passage des gaz zéro et d'étalonnage.

En se référant à nouveau à la figure 1, le tube 13 est en appui contre la face supérieure du disque 15 du moyen de sélection 5 du rapport de dilution, au niveau du secteur angulaire 25. Une plaque de support 17 inférieure est montée contre le disque 15, du côté opposé à la plaque 14. Les plaques 14, 17 sont fixées sur le disque 15 sensiblement en son milieu, et entre elles par des organes de liaison, par exemple du type vis-écrou (non représentés). Un tube 29 de raccordement inférieur est fixé sur la plaque 17, en regard du tube 13. Le gaz d'étalonnage, après avoir traversé les éléments calibrés du secteur angulaire 25, ici au nombre de huit, ainsi que le tube 29 est transporté par une conduite 30 jusqu'à un raccord 31 en té.

Le circuit de gaz zéro 4 comprend une source de gaz zéro 32 de dilution pourvue d'un élément de régulation de pression 33, par exemple un manomètre. Le gaz est véhiculé par une conduite 34 jusqu'à un raccord 35 en té permettant l'obtention d'un débit de fuite contrôlé par ledit régulateur de pression 33 et illustré schématiquement par la flèche 36. Une conduite 37 est reliée au raccord 10 et amène le gaz zéro à un tube 38 de raccordement supérieur, fixé sur la plaque 14, et dont une extrémité inférieure est en appui contre la face supérieure du disque 15, au niveau du secteur angulaire 19. Le gaz zéro traverse les éléments calibrés 16, ici au nombre de deux, puis traverse un tube 38 de raccordement inférieur, en regard du tube 39, et une conduite 40 reliée au raccord 31. La conduite de mélange 6, reliée au raccord 31, achemine les gaz zéro de dilution et d'étalonnage ainsi mélangés jusqu'à l'analyseur 2. La pompe de l'analyseur 2 permet, par aspiration, la circulation des gaz zéro de dilution et des gaz d'étalonnage. En d'autres termes, la pompe de l'analyseur 2 est utilisée comme air moteur pour le fonctionnement du dispositif 1.

Pour générer différentes concentrations de mélange gazeux et étalonner ainsi l'analyseur 2, on peut ainsi modifier la position des tubes 13, 29 et 38, 39 sur le moyen de sélection 5 du rapport de dilution du gaz d'étalonnage, par une rotation des plaques 14 et 17, de manière à faire varier les sections de passage des éléments calibrés 16 traversés respectivement par les gaz d'étalonnage et de dilution tout en conservant une section de passage globale constante. Avec le dispositif d'étalonnage tel que représenté, on peut ainsi faire varier la dilution du gaz d'étalonnage d'une valeur allant de 0% à 100%, par pas de 10%. Bien entendu, il est également envisageable de prévoir un moyen de sélection 5 du rapport de dilution pourvu d'un nombre plus ou moins important d'éléments calibrés 16 afin d'obtenir une incrémentation différente.

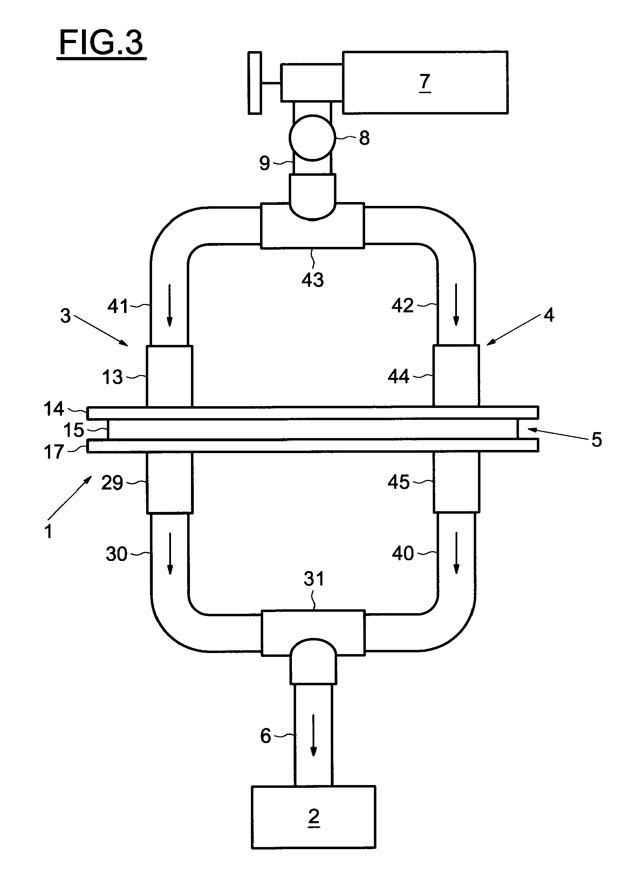

Dans la variante illustrée sur la figure 3, sur laquelle les éléments identiques aux figures 1 et 2 portent les mêmes références, les circuits de gaz zéro de dilution et de gaz d'étalonnage 3, 4 comprennent respectivement une conduite 41, 42 reliées par l'intermédiaire d'un raccord 43 à la source de gaz d'étalonnage 7. Un tube 44 est relié à la conduite 42, et vient en appui contre le disque 15. Un tube 45 est monté du côté opposé au tube 44 en considérant le disque 15, en regard dudit tube 44. Les tubes 44 et 45 comprennent des éléments de filtrage dudit gaz (non représentés), pouvant être par exemple des cartouches filtrantes en métal fritté, de manière à filtrer le gaz d'échantillonnage et obtenir ainsi un gaz de dilution.

D'une manière analogue au mode de réalisation précédent, la pompe de l'analyseur 2 permet la circulation des gaz, par aspiration. Ce mode de réalisation est particulièrement adapté pour une application de mesure lorsque la source de gaz d'étalonnage 7 comprend un gaz très concentré dépassant la gamme maximale de l'analyseur 2.

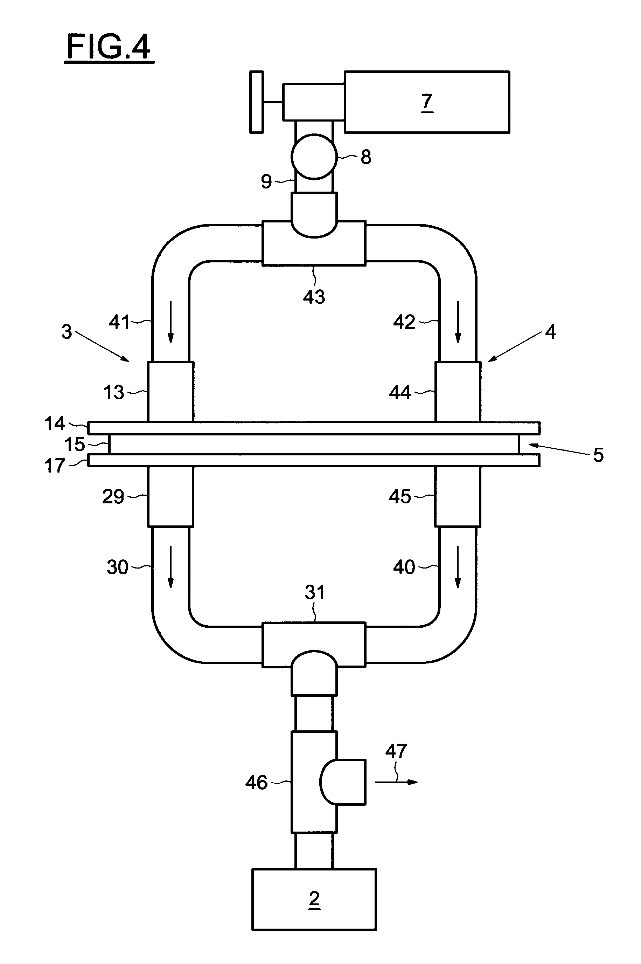

Le mode de réalisation illustré à la figure 4 diffère du précédent en ce que la source de gaz d'étalonnage 7 permet la circulation dudit gaz à travers les circuits de gaz zéro de dilution et d'étalonnage 3, 4 et en ce que la conduite 6 de mélange comprend un raccord 46 permettant l'obtention d'un débit de fuite, illustré schématiquement par la flèche 47, supérieur au débit du circuit de gaz d'étalonnage 3 lorsque les tubes 13 et 29 sont montés au niveau du secteur angulaire 23 (figure 2).

Le dispositif selon l'invention présente de nombreux avantages parmi lesquels l'obtention d'une pluralité de concentrations de mélange gazeux par dilution d'un gaz d'étalonnage de manière particulièrement simple et économique en conservant une même perte de charge, quel que soit le rapport de dilution choisi.

## Revendications

1. Dispositif d'étalonnage adapté à un analyseur de gaz, **caractérisé en ce qu'**il comprend un circuit de gaz zéro (4) de dilution relié à une source de gaz zéro (32) de dilution, un circuit de gaz d'étalonnage (3) relié à une source de gaz d'étalonnage (7), une conduite de mélange (6) raccordée audits circuits de gaz et apte à être reliée à l'analyseur (2) de gaz, et un moyen de sélection (5) du rapport de dilution du gaz d'étalonnage, traversé par les circuits de gaz, et pourvu d'une pluralité d'éléments calibrés (16) pour le passage des gaz, chacun des circuits de gaz traversant un nombre prédéfini d'éléments calibrés relatif au rapport de dilution sélectionné, la section de passage globale des éléments calibrés traversés par lesdits gaz étant constante.

2. Dispositif selon la revendication 1, **caractérisé en ce que** le nombre total d'éléments calibrés répartis entre les circuits de gaz d'étalonnage et de gaz zéro de dilution est constant, les sections de passage élémentaires des éléments calibrés étant identiques entre elles.

3. Dispositif selon la revendication 1 ou 2, **caractérisé en ce que** le moyen de sélection comprend un disque (15) pourvu d'une pluralité de secteurs angulaires (17 à 28), les éléments calibrés traversés par les circuits de gaz étant disposés au niveau d'une paire de secteurs angulaires opposés.

4. Dispositif selon l'une quelconque des revendications précédentes, **caractérisé en ce que** la source de gaz zéro de dilution est constituée par la source de gaz d'étalonnage, le circuit de gaz zéro de dilution comprenant un élément de filtrage du gaz d'étalonnage.

5. Dispositif selon l'une quelconque des revendications précédentes, **caractérisé en ce qu'**il comprend un raccord (10, 46) apte à permettre l'obtention d'un débit de fuite supérieur au débit du circuit de gaz zéro de dilution lorsque le rapport de dilution sélectionné est minimum.

6. Dispositif selon la revendication 5, **caractérisé en ce que** le raccord est monté au niveau de la conduite de mélange.

7. Dispositif selon la revendication 5, **caractérisé en ce que** le raccord est monté au niveau du circuit de gaz zéro de dilution, en amont du moyen de sélection (5) du rapport de dilution du gaz d'étalonnage.

8. Dispositif selon l'une quelconque des revendications précédentes, **caractérisé en ce qu'**il comprend une pompe pour la circulation des gaz constituée par la pompe du circuit d'échantillonnage de l'analyseur de gaz.

9. Dispositif selon l'une quelconque des revendications 1 à 7, **caractérisé en ce que** les sources de gaz sont aptes à permettre la circulation desdits gaz.

10. Procédé d'étalonnage d'un analyseur de gaz, **caractérisé en ce qu'**il comprend les étapes au cours desquelles :
- on fait circuler des gaz zéro de dilution et d'étalonnage dans des circuits distincts,
- on fait varier la section de passage des gaz de chacun des circuits en fonction du rapport de dilution désiré,
- on conserve constante la section de passage globale des gaz desdits circuits, et
- on mélange les gaz zéro de dilution et d'étalonnage.
